# DEMANDE DE BREVET EUROPEEN

(11) **EP 2 826 648 A1**
(43) Date de publication de la demande: **21.01.2015**
(21) Numéro de dépôt: 13177117.2
(22) Date de dépôt: 18.07.2013
(51) Int. Cl.: B60J 5/06

(54) **Agencement d'une porte coulissante de véhicule à ouverture augmentée**

(71) Demandeur: Vehixel Carrossier Constructeur, 01340 Attignat (FR)
(72) Inventeur: Gallay, Julien, 01000 Bourg-En-Bresse (FR); Basilio Salgado, Alcides, 01340 Attignat (FR)
(74) Mandataire: Thibault, Jean-Marc

(57) **Abrégé**

L'invention concerne un agencement d'une porte coulissante de véhicule automobile comportant un dispositif de maintien et de guidage **(4)** d'un ouvrant **(5)** cotissant comportant au moins une glissière **(8)** fixée à la structure du véhicule et coopérant avec un système à roulement mobile le long de la glissière **(8).**

Selon l'invention, le système de roulement est porté par un support **(20)** de guidage en coulissement d'un rail **(21)** supporté par l'ouvrant coulissant **(5),** le rail coulissait **(21)** étant mobile par rapport au système de roulement **(11)** de sorte que l'ouvrant occupe une position d'ouverture augmentée, un système de rappel étant interposé entre le support de guidage **(20)** et l'ouvrant **(5)** pour solliciter le rail **(21)** à venir occuper sa première position lorsque l'ouvrant est entraîné en fermeture.

## Description

La présente invention concerne le domaine technique de l'agencement d'une porte coulissante pour des véhicules de tous types tels que voiture, véhicule utilitaire, camion, autocar, etc.

De manière classique, un agencement d'une porte coulissante pour véhicule comporte un dispositif de maintien et de guidage d'un ouvrant coulissant en ouverture et en fermeture par rapport à la structure du véhicule. L'ouvrant coulisse ainsi entre des positions d'ouverture et de fermeture, d'un passage d'accès aménagé dans la structure du véhicule.

Dans l'état de la technique, de nombreuses solutions techniques ont été proposées pour réaliser un dispositif de maintien et de guidage de l'ouvrant coulissant. D'une manière générale, le dispositif de maintien et de guidage assure à l'ouverture et à la fermeture, un changement de plan de l'ouvrant. Cet ouvrant est par ailleurs guidé dans un plan parallèle au plan de la structure du véhicule, en coulissement en étant équipé d'au moins un système à roulement mobile à l'intérieur d'une glissière fixée à la structure du véhicule.

Pour faciliter les opérations d'entrée et de sortie des utilisateurs par le passage d'accès équipé d'un tel ouvrant coulissant, il apparaît le besoin en position d'ouverture, de dégager complètement l'ouvrant par rapport au passage d'accès. Tel est le cas notamment pour permettre le passage de personnes à mobilité réduite ou de fauteuils roulants.

La solution visant à agrandir le passage d'accès ne peut pas être mise en oeuvre dans de nombreux cas dans la mesure où la longueur de la structure du véhicule n'est pas suffisante pour le montage du dispositif de maintien et de guidage de l'ouvrant coulissant.

La présente invention vise à apporter une solution à ce problème en permettant de disposer d'un passage d'accès avec une grande ouverture tout en ne nécessitant pas de rallonger la structure du véhicule devant recevoir le dispositif de maintien et de guidage de l'ouvrant coulissant.

Pour atteindre un tel objectif, l'agencement de porte coulissante de véhicule comporte un dispositif de maintien et de guidage d'un ouvrant coulissant en ouverture et fermeture entre une position ouverte et une position fermée par rapport à la structure du véhicule, le dispositif de maintien et de guidage comportant au moins une glissière fixée à la structure du véhicule et coopérant avec un système à roulement mobile le long de la glissière entre une position correspondant à la position fermée de l'ouvrant et une position de butée du système de roulement correspondant à une position ouverte de l'ouvrant.

Selon l'invention, le système de roulement est porté par un support de guidage en coulissement d'un rail supporté par l'ouvrant coulissant, le rail coulissant étant mobile par rapport au système de roulement entre une première position et une deuxième position d'ouverture augmentée de l'ouvrant atteinte à la suite d'une course supplémentaire en ouverture de l'ouvrant au-delà de sa position de butée de sorte que l'ouvrant occupe une position d'ouverture augmentée, un système de rappel étant interposé entre le support de guidage et l'ouvrant pour solliciter le rail à venir occuper sa première position lorsque l'ouvrant est entraîné en fermeture.

De plus, l'agencement selon l'invention peut présenter en outre en combinaison au moins l'une et/ou l'autre des caractéristiques additionnelles suivantes :
- le système de rappel comporte un vérin simple effet à gaz,
- le système de rappel comporte un ressort de compression,
- le support de guidage est équipé d'organes de roulement coopérant avec le rail,
- le rail est monté sur la paroi interne de l'ouvrant coulissant,
- le rail coulisse entre deux butées définissant les première et deuxième positions du rail,
- le dispositif de maintien et de guidage comporte un ensemble haut et un ensemble bas ainsi que la glissière coopérant avec le système de roulement et positionnée entre les ensembles haut et bas,
- le dispositif de maintien et de guidage comporte une butée de blocage de l'ouvrant dans sa position d'ouverture augmentée.

Diverses autres caractéristiques ressortent de la description faite ci-dessous en référence aux dessins annexés qui montrent, à titre d'exemples non limitatifs, des formes de réalisation de l'objet de l'invention.
Les **Figures 1** à **3** sont des vues d'un exemple de réalisation d'un agencement d'une porte coulissante conforme à l'invention dans lequel l'ouvrant coulissant est montré respectivement en position de fermeture, d'ouverture simple et d'ouverture augmentée.
Les **Figures 4** et **5** sont des vues à plus grande échelle montrant le dispositif de maintien et de guidage correspondant aux positions de l'ouvrant coulissant respectivement illustré aux **Fig. 2** et **3**.
La **Figure 6** est une vue de détail d'une autre variante de réalisation d'un dispositif de maintien et de guidage conforme à l'invention.

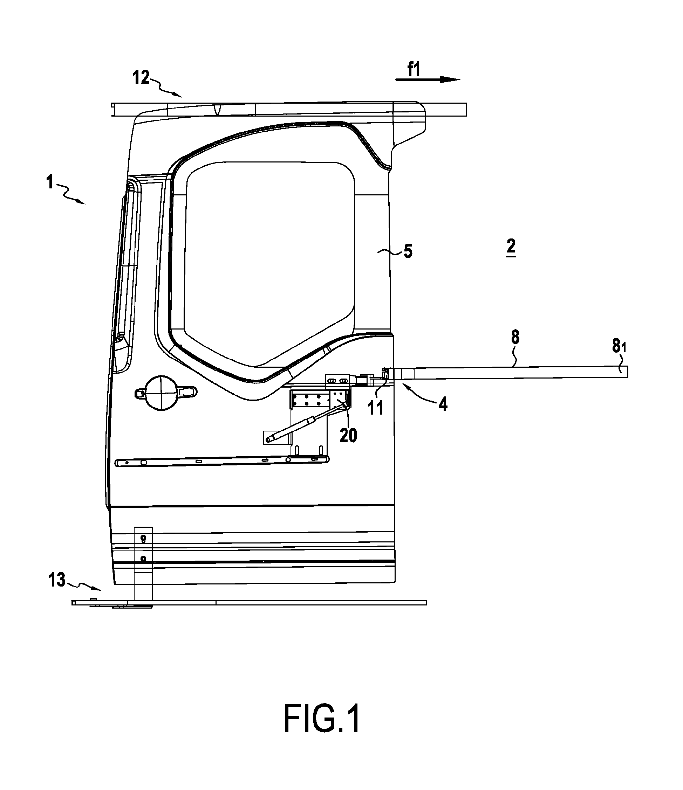

Tel que cela ressort plus précisément des **Fig. 1** à **3**, l'objet de l'invention concerne un agencement d'une porte coulissante **1** pour un véhicule représenté par une partie de structure **2** ou une carrosserie.

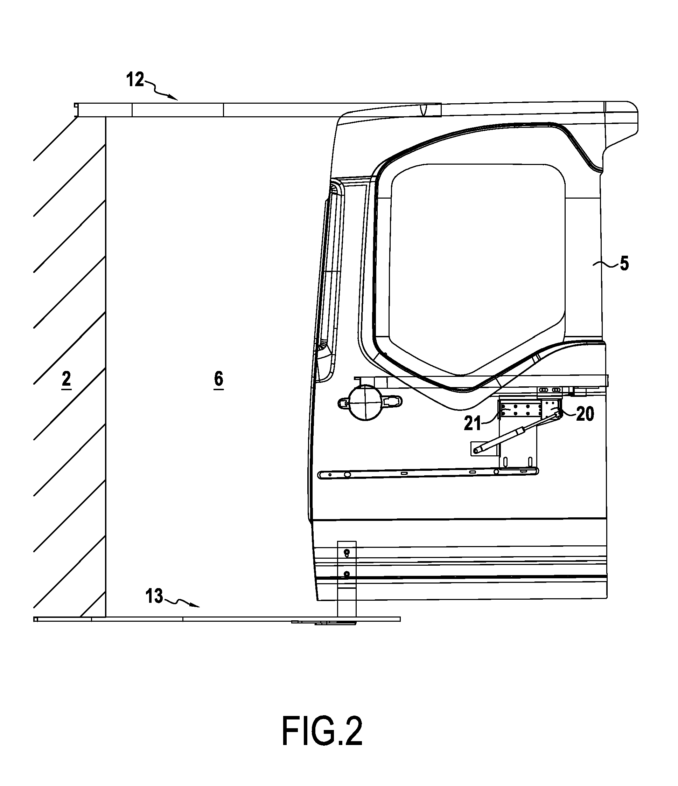

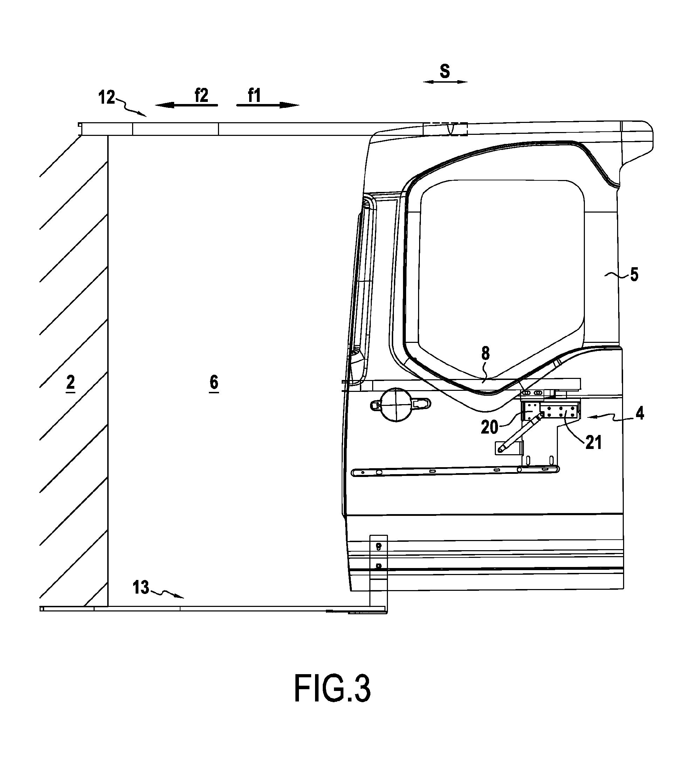

Cet agencement **1** comporte un dispositif de maintien et de guidage **4** d'un ouvrant coulissant **5** entre une position d'ouverture et une position de fermeture d'un passage d'accès **6** aménagé dans la structure du véhicule. L'ouvrant **5** est déplacé en coulissement selon un sens d'ouverture représenté par la flèche **f1** sur les figures pour passer d'une position de fermeture **(****Fig. 1****)** à une position d'ouverture dite simple et augmentée illustrée plus particulièrement respectivement aux **Fig. 2** et **3** comme cela sera expliqué dans la suite de la description. Bien entendu, l'ouvrant **5** est commandé pour se déplacer selon un sens de fermeture **f2** opposé au sens **f1** afin de passer de la position d'ouverture à la position de fermeture. Le déplacement de l'ouvrant **5** peut être de type manuel ou automatisé.

Le dispositif de maintien et de guidage **4** comporte au moins une glissière **8** fixée à la structure **2** du véhicule et coopérant avec un système à roulement **11** mobile le long de la glissière **8** et supportée par l'ouvrant **5.** Ainsi, l'application d'un effort de poussée ou de traction sur l'ouvrant **5** conduit au déplacement du système de roulement **11** à l'intérieur de la glissière **8** qui présente au moins une butée d'arrêt **8₁** en ouverture pour ce système de roulement, réalisée de préférence à l'extrémité de la glissière **8** située la plus éloignée du passage d'accès **5.**

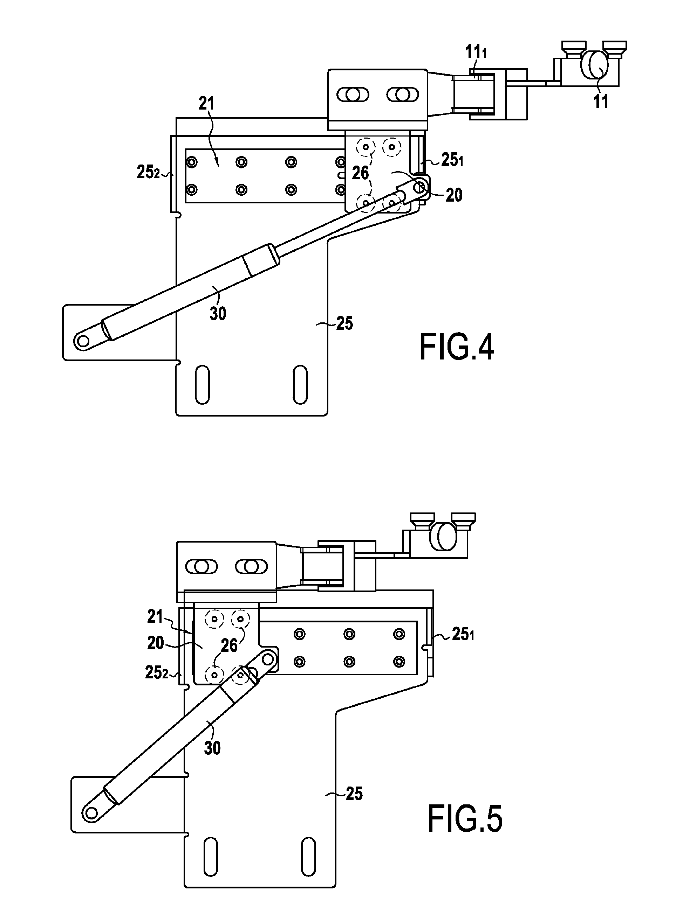

Bien entendu, la glissière **8** est réalisée de manière appropriée pour coopérer avec le système à roulement **11** de tous types connus. Comme cela apparaît plus précisément aux **Fig. 4** et **5**, le système à roulement **11** comporte par exemple, un bras de support **11₁** pour une série d'organes de roulement coopérant avec la glissière **8.**

Dans l'exemple illustré, le dispositif de maintien et de guidage **4** comporte également un ensemble haut **12** et un ensemble bas **13** de support et de guidage pour l'ouvrant, de tous types connus en soi. De tels ensembles haut et bas **12, 13** de guidage et de support de l'ouvrant coulissant ne sont pas décrits plus précisément car ils sont bien connus de l'homme du métier et ne font pas partie précisément de l'objet de l'invention. Dans l'exemple illustré, les ensembles haut **12** et bas **13** sont associés aux parties haute et basse de l'ouvrant tandis que la glissière **8** s'étend entre les ensembles haut et bas. Bien entendu, il peut être envisagé de mettre en oeuvre un dispositif de maintien et de guidage **4** comportant en plus de la glissière **8** et du système de roulement **11** soit l'ensemble de support et de guidage haut **12,** soit l'ensemble de support et de guidage bas **13.**

De manière classique, l'ouvrant **5** est déplacé en ouverture selon la flèche **f1** entre sa position de fermeture du passage d'accès **6** illustrée à la **Fig. 1** et sa position d'ouverture dite simple illustrée à la **Fig. 2**. Simultanément au déplacement de l'ouvrant, le système à roulement **11** est mobile également entre une première position correspondant à la position fermée de la porte et une deuxième position correspondant au positionnement du système de roulement **11** sur la butée d'un arrêt **8₁** pour le coulissement du système de roulement **11.**

Conformément à l'invention, le système à roulement **11** est porté par un support de guidage en coulissement **20** pour un rail **21** supporté par l'ouvrant **5.** Dans l'exemple illustré, le support de guidage en coulissement **20** se présente sous la forme d'un flasque monté de manière solidaire au bras de support **11₁** du système à roulement **11.**

Le rail **21** est monté coulissant sur le support de guidage **20** de toutes manières appropriées. Dans l'exemple illustré, le rail **21** est monté sur une plaque **25** fixée par tous moyens appropriés sur la face interne de l'ouvrant coulissant **5.** Le rail de guidage **21** délimite avec la plaque **25** au niveau de sa partie supérieure et de sa partie inférieure, deux rainures de roulement pour des organes de roulement ou des galets **26** portés par le support **20.**

Le rail **21** est guidé en coulissement par le support de guidage **20** de manière à suivre les mouvements d'ouverture et de fermeture de l'ouvrant **5.** Le déplacement du rail **5** par rapport au support de guidage **20** est limité par des butées **25₁, 25₂** présentées par la plaque **25.**

Le rail **21** et par suite l'ouvrant **5** sont aptes à occuper par rapport au support de guidage **20,** une première position dite de repos délimitée par la butée **25₁** située la plus éloignée du passage d'accès **6** comme illustrée aux **Fig. 1****,** **2** et **4**, et une deuxième position dite d'ouverture augmentée définie par la butée **25₂** située la plus proche du passage d'accès **6** comme illustrée aux **Fig. 3** et **5****.**

Le rail **21** et par suite l'ouvrant **5** sont donc aptes à se déplacer relativement par rapport au système à roulement **11** d'une part entre sa première et sa deuxième positions, selon le sens d'ouverture permettant d'accroître l'ouverture du passage d'accès **6** et d'autre part entre sa deuxième et sa première positions, selon le sens de fermeture permettant de diminuer l'ouverture du passage d'accès **6.**

Un système de rappel **30** est interposé entre le support de guidage **20** et l'ouvrant **5** de manière à solliciter le rail **21** à venir occuper sa première position. En d'autres termes, le système de rappel **30** tend à déplacer l'ouvrant **5** par rapport au support de guidage **20,** dans le sens de fermeture représenté par la flèche **f₂.**

Dans l'exemple de réalisation illustré aux **Fig. 1** à **5****,** le système de rappel **30** comporte un vérin à gaz à simple effet dont le corps est fixé à la plaque **25** et la tige est fixée au support de guidage **20.** Tel que cela ressort des figures, le vérin **30** est monté selon une direction inclinée par rapport à la direction d'extension du rail coulissant **21,** de manière à assurer la mise en contact du support de guidage **20** avec la première butée **25₁.** Ainsi, le déplacement du rail **21** par rapport au support de guidage **20** de sa première position à sa deuxième position conduit à la compression du vérin tandis que le vérin exerce son effort de rappel pour ramener le rail **21** à sa première position par rapport au support de guidage **20.**

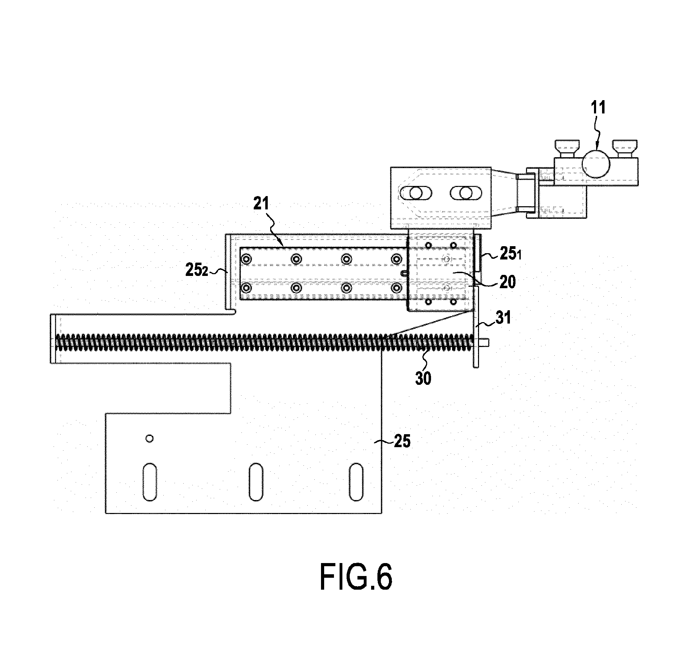

Dans l'exemple de réalisation illustré à la **Fig. 6**, le système de rappel **30** comporte un ressort de compression dont une extrémité est fixée à la plaque **25** tandis que l'autre extrémité est sollicitée par un doigt **31** s'étendant à partir du support de guidage **20.** Comme expliqué précédemment, le ressort **30** est comprimé lorsque le rail **21** est déplacé par rapport au support de guidage **20** de sa première position à sa deuxième position. A l'inverse, le ressort exerce son effort de rappel pour ramener le rail **21** à sa première position.

Le fonctionnement de l'agencement de la porte coulissante **1** selon l'invention découle directement de la description qui précède. Dans la position de fermeture du passage d'accès **6** par l'ouvrant **5,** il est à noter que le rail coulissant **21** est positionné dans sa première position en étant sollicité par le système de rappel **30 (****Fig. 1****).** L'ouverture de la porte par le coulissement de l'ouvrant **5** selon la flèche **f1** conduit à assurer l'amenée du système à roulement **11** en contact contre la butée **8₁** de la glissière **8** (**Fig. 2**). Dans cette position, l'ouvrant **5** occupe une position d'ouverture dite simple.

La poursuite du déplacement de l'ouvrant **5** dans le sens d'ouverture **f1** conduit au déplacement du rail coulissant **21** entre sa première position (**Fig. 2****,** **4**) et sa deuxième position **(****Fig. 3****,** **5**) dans la mesure où le support **20** occupe une position fixe définie par la mise en contact du système de roulement **11** contre la butée **8₁** de la glissière. La deuxième position du rail **21** est atteinte à la suite d'une course supplémentaire **S** en ouverture de l'ouvrant au-delà de sa position d'ouverture définie par la butée **8₁** de la glissière **8.** La deuxième position du rail **21** est atteinte lorsqu'il vient en contact avec la butée **25₂.** La course supplémentaire **S** de l'ouvrant correspond donc à la mesure séparant les butées **25₁, 25₂** pour le rail coulissant **21.**

Le déplacement du rail **21** entre sa première et sa deuxième position conduit à comprimer le système de rappel **30.** Il est à noter que la deuxième position d'ouverture de l'ouvrant **5** est maintenue à l'aide d'une butée de blocage de l'ouvrant non représentée réalisée de toute manière connue et faisant partie par exemple de l'ensemble haut et/ou bas de support et de guidage.

La mise en oeuvre d'un rail de guidage **7** mobile sur le système à roulement **11** de l'ouvrant permet d'augmenter l'ouverture du passage d'accès **6** tout en n'augmentant pas l'encombrement pris par la glissière **8.**

Lors du mouvement de fermeture de l'ouvrant **5** dans un sens de fermeture représenté par la flèche **f2**, le système de rappel **30** exerce un effort de rappel entre l'ouvrant **5** et le support **20** de manière que le rail **21** vienne occuper sa première position définie par la butée **25₁.**

L'invention n'est pas limitée aux exemples décrits et représentés car diverses modifications peuvent y être apportées sans sortir de son cadre.

## Revendications

1. Agencement d'une porte coulissante de véhicule automobile comportant un dispositif de maintien et de guidage **(4)** d'un ouvrant **(5)** coulissant en ouverture et fermeture entre une position ouverte et une position fermée par rapport à la structure **(2)** du véhicule, le dispositif de maintien et de guidage **(4)** comportant au moins une glissière **(8)** fixée à la structure du véhicule et coopérant avec un système à roulement **(11)** mobile le long de la glissière **(8)** entre une position correspondant à la position fermée de l'ouvrant et une position de butée du système de roulement **(11)** correspondant à une position ouverte de l'ouvrant, **caractérisé en ce que** le système de roulement **(11)** est porté par un support **(20)** de guidage en coulissement d'un rail **(21)** supporté par l'ouvrant coulissant **(5),** le rail coulissant **(21)** étant mobile par rapport au système de roulement **(11)** entre une première position et une deuxième position d'ouverture augmentée de l'ouvrant atteinte à la suite d'une course supplémentaire en ouverture de l'ouvrant au-delà de sa position de butée de sorte que l'ouvrant occupe une position d'ouverture augmentée, un système de rappel **(30)** étant interposé entre le support de guidage **(20)** et l'ouvrant **(5)** pour solliciter le rail **(21)** à venir occuper sa première position lorsque l'ouvrant est entraîné en fermeture.

2. Agencement selon la revendication 1, **caractérisé en ce que** le système de rappel **(30)** comporte un vérin simple effet à gaz.

3. Agencement selon la revendication 2, **caractérisé en ce que** le système de rappel **(30)** comporte un ressort de compression.

4. Agencement selon la revendication 1, **caractérisé en ce que** le support de guidage **(20)** est équipé d'organes de roulement **(26)** coopérant avec le rail **(21).**

5. Agencement selon l'une des revendications 1 à 4, **caractérisé en ce que** le rail **(21)** est monté sur la paroi interne de l'ouvrant coulissant.

6. Agencement selon l'une des revendications 1 à 5, **caractérisé en ce que** le rail **(21)** coulisse entre deux butées **(25₁, 25₂)** définissant les première et deuxième positions du rail **(21).**

7. Agencement selon l'une des revendications 1 à 6, **caractérisé en ce que** le dispositif de maintien et de guidage **(4)** comporte un ensemble haut **(12)** et un ensemble bas **(13)** ainsi que la glissière **(8)** coopérant avec le système de roulement **(11)** et positionnée entre les ensembles haut et bas.

8. Agencement selon l'une des revendications 1 à 7, **caractérisé en ce que** le dispositif de maintien et de guidage **(4)** comporte une butée de blocage de l'ouvrant dans sa position d'ouverture augmentée.
